**Europäisches Patentamt**

**European Patent Office**

**Office européen des brevets**

(11) Veröffentlichungsnummer: **0 071 750**
**A2**

## (12) EUROPÄISCHE PATENTANMELDUNG

(21) Anmeldenummer: **82105797.3**

(22) Anmeldetag: **30.06.82**

(51) Int. Cl.³: **F 16 K 1/18**

(30) Priorität: **06.08.81 DE 3131162**

(43) Veröffentlichungstag der Anmeldung: **16.02.83**
**Patentblatt 83/7**

(84) Benannte Vertragsstaaten: **CH FR GB IT LI NL**

(71) Anmelder: **Leybold-Heraeus GmbH, Bonner Strasse 504 Postfach 51 07 60, D-5000 Köln 51 (DE)**

(72) Erfinder: **Frank, Erich, Langgasse 20, D-6451 Hammersbach II (DE)**
Erfinder: **Grein, Lutz, Klefernweg 7, D-6450 Hanau 1 (DE)**

(74) Vertreter: **Leineweber, Jürgen, Dipl.-Phys., Bonner Strasse 504 Postfach 51 07 60, D-5000 Köln 51 (DE)**

(54) **Drosselklappe mit genauer Einstellung des Durchflussspaltes für vakuumtechnische Anlagen.**

(57) Bei einer Drosselklappe mit genauer Einstellung des Durchflußspaltes für vakuumtechnische Anlagen, bei welcher die Dichtplatte (3) mit einer zur Durchflußöffnung senkrecht liegenden Welle (4) verschwenkt wird, deren Bewegung über eine vakuumgedichtete Schubstange (19) von einem in der Atmosphäre liegenden Stellantrieb (17) erfolgt, steht die Schwenkwelle (4) unter der Wirkung einer vorgespannten Feder (8), die auf die Schwenkwelle ein Drehmoment ausübt, wobei der Stellantrieb (17) eine Selbsthemmung oder Bremsung aufweist.

LEYBOLD-HERAEUS GMBH
Köln-Bayenthal

Drosselklappe mit genauer Einstellung des Durchflußspaltes für vakuumtechnische Anlagen

Die Erfindung betrifft eine Drosselklappe mit genauer
Einstellung des Durchflußspaltes für vakuumtechnische
Anlagen, bei welcher die Dichtplatte mit einer zur Durchflußöffnung senkrecht liegenden Welle geschwenkt wird,
deren Bewegung über eine vakuumgedichtete Schubstange von
einem in der Atmosphäre liegenden Stellantrieb erfolgt.
Derartige Drosselklappen sind zwischen Vakuumkammern und
den Vakuumpumpsätzen angeordnet. Ihr Einstellwinkel bestimmt die Spaltgröße und damit den Leitwert. Durch den
Leitwert wiederum ergibt sich die Absaugleistung aus der
Vakuumkammer. Bei bestimmter Gasabgabe des zu behandelnden Gutes in den Vakuumkammern, oder bei bestimmter Verfahrensgaszufuhr, ergibt sich dann durch diese Absaugleistung der Druck während des Verfahrensvorganges in der
Vakuumkammer.

Insbesondere im ersten Öffnungsbereich tritt eine zum
Öffnungswinkel stark überproportionierte Leitwerterhöhung
ein. Gerade in diesem Bereich muß daher eine Einstellung
der Dichtplatte mit höchster Genauigkeit und für Wiederholung des Verfahrens reproduzierbar erfolgen. Der Einstellvorgang muß hierbei z.T. mit sehr schneller Reaktionsgeschwindigkeit durchgeführt werden.

Beim Öffnen können erhebliche Druckdifferenzen zwischen
Vakuumkammer und Pumpsatz auf die Drosselklappe wirken.
Infolge der durch diese eintretenden hohen Strömungsgeschwindigkeiten im Öffnungsspalt besteht die Gefahr eines
starken Flatterns der Drosselklappe.

0071750

Hierdurch wird einerseits die Einstellgenauigkeit wesentlich beeinträchtigt, andererseits tritt eine starke Beanspruchung aller Übertragungsglieder und damit Spiel in den Verbindungslagern ein.

Die Verstellgeschwindigkeit, die verlangte hohe Einstellgenauigkeit und Reproduzierbarkeit setzen eine spielfreie Verstellung der Schwenkwelle und damit der Dichtplatte voraus. Um dieses zu erreichen und auch um ein Flattern der Drosselklappe zu verhindern, sieht die Erfindung vor, daß die Schwenkwelle unter der Wirkung einer vorgespannten Feder steht, die auf die Schwenkwelle ein Drehmoment ausübt, und daß der Stellantrieb eine Selbsthemmung oder Bremsung aufweist. Durch diese Maßnahme ist die Schwenkwelle und damit die Dichtplatte gegen das Gehäuse derart verspannt, daß ein Flattern verhindert wird und alle Spielwege und Reibungskräfte bis zum Stellantrieb überwunden und in einer Richtung orientiert sind. Durch die Blockierung des Stellantriebs mittels Selbsthemmung oder Bremse ist gemäß der erfolgten Einstellung des Antriebs eine bestimmte Positionierung der Schwenkwelle und damit der Dichtplatte gesichert.

Zweckmäßig ist die Richtung des Drehmomentes so gewählt, daß es in Richtung Schließstellung der Drosselklappe (3) wirkt. Dadurch läßt sich - infolge des verspannten Spiels in den Übertragungsgliedern zwischen Stellantrieb und Klappe - ein hartes Anfahren durch positionsgenaues Abschalten des Stellantriebes vermeiden.

Durch Abnutzung im Stellantrieb kann aber eine Veränderung zwischen Stellung des Antriebes und Positionierung der Schwenkwelle eintreten. Damit hierdurch keine Einstellfehler der Dichtplatte hervorgerufen werden, sieht die Erfindung im weiteren vor, daß die elektrischen Meßgeräte oder Schaltmittel, welche die Position erfassen, direkt an der Schwenkwelle oder an den Übertragungsgliedern zum Stellantrieb angekoppelt sind.

- 3 -

0071750

Gemäß der Erfindung ist es im weiteren besonders zweckmäßig, daß die Feder als Flach-Spiralfeder ausgebildet ist. Hierdurch ergeben sich besonders günstige Einbauverhältnisse, und die Feder läßt sich so vorspannen, daß alle Reibungskräfte in den Zwischengliedern bis zum Stellantrieb überwunden werden.

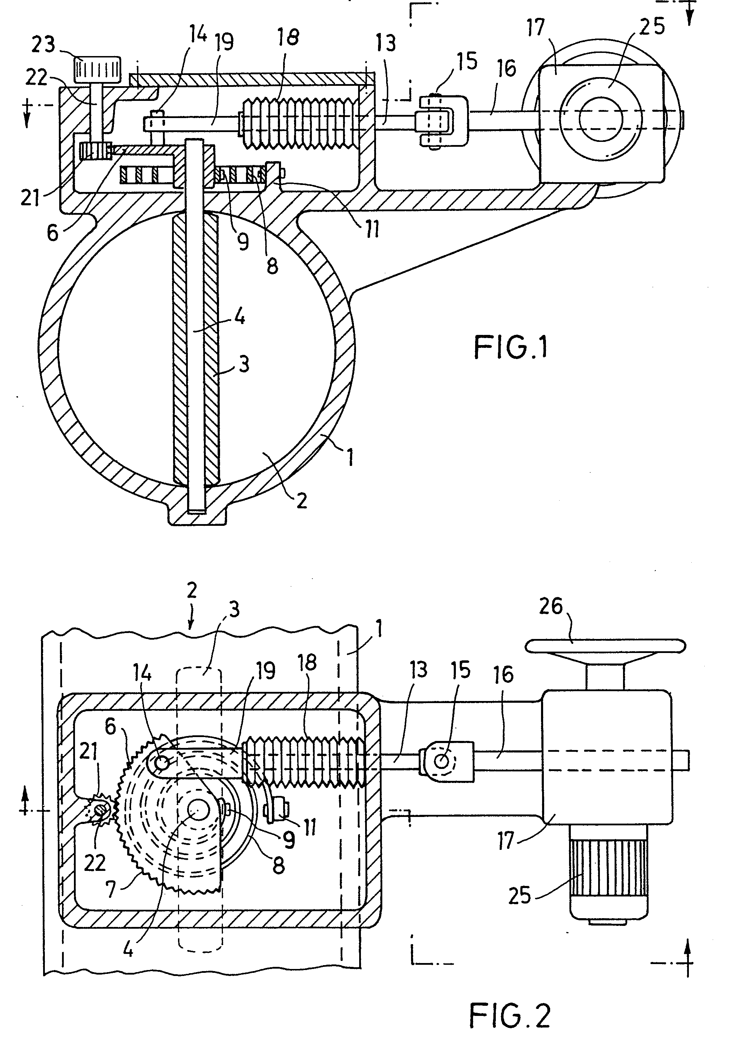

Figuren 1 und 2 zeigen beispielhaft eine erfindungsgemäße Vorrichtung im Seitenschnitt und in der Draufsicht.

Im Gehäuse 1 befindet sich die Durchflußöffnung 2, welche von der Dichtplatte 3 durch Schwenken um die Schwenkwelle 4 verschlossen wird. Schwenkwelle 4 ist im Gehäuse 1 gelagert und trägt oben einen Hebelarm 6 mit Zahnsegment 7. An diesem Hebelarm 6 ist die Flach-Spiralfeder 8 mittels Bolzen 9 befestigt. Das andere Ende der Flach-Spiralfeder 8 ist mit dem Gehäusevorsprung 11 fest verbunden. In der gezeichneten Offenstellung ist die Flach-Spiralfeder 8 über die Vorspannung heraus noch durch das Schwenken der Dichtklappe um ca. 90$^{\circ}$ gespannt.

Das Schwenken der Schwenkwelle 4 und damit das Spannen der Flach-Spiralfeder 8 erfolgt mittels der Schubstange 13, die am Zapfen 14 des Hebelarms 6 und über Bolzen 15 mit Schubstange 16 des Stellantriebes 17 gekoppelt ist. Die Schubstange 13 vollführt bei der Schwenkbewegung eine Winkelverstellung. Um diese auszugleichen, ist eine Balgdichtung 18 zwischen Schubstangenkopf 19 und Gehäuse 1 angebracht.

Das Zahnsegment 7 wirkt mit dem Präzisionszahnrad 21 spielfrei zusammen. Dieses sitzt auf der Welle 22 des elektrischen Stellungsgebers 23. Welle 22 ist im Gehäuse 1 vakuumdicht gelagert.

Der Stellantrieb 17 kann mittels des Elektromotors 25 oder des Handrads 26 angetrieben werden und beinhaltet ein selbsthemmendes Schneckengetriebe, sowie eine Bremsvorrichtung für den Antriebsmotor 25.

Die Flach-Spiralfeder 8 versucht mit großer Kraft die Dichtplatte 3 in die Schließstellung zu ziehen. Hierdurch beaufschlagt sie alle Übertragungsglieder wie Zapfenlagerung 14, Schubstange 13, Bolzenlagerung 15, Balgdichtung 18, Schubstange 16 des Stellantriebs 17 bis zum selbsthemmenden Schneckengetriebe bzw. der Bremsvorrichtung. Jegliches Spiel in diesem Übertragungssystem, oder jegliche Verstellung durch Reibungen in den Verbindungslagern, wird hierdurch aufgehoben. Wird jetzt der Motor 25 ein, und dabei die Bremse abgeschaltet, oder erfolgt Drehen des Handrads 26 nach Lösen der Bremse, so führt jede kleinste Verstellung des Stellantriebes - spielfrei - zur Verstellung der Dichtplatte 3, Hierdurch wird also ein höchster Grad von Synchronverstellung erreicht.

Erfolgt die Erfassung der Position durch den Stellungsgeber 23, so läßt sich der Stellantrieb 17, 25 ohne Spiel der Übertragungsglieder derart steuern, daß eine genaue Positionierung der Dichtplatte 3 möglich ist.

In der Endposition zieht die Flach-Spiralfeder 8 die Dichtplatte 3 in die Dichtstellung. Hierbei läßt sich dann durch das verspannte Spiel in den Übertragungsgliedern ein hartes Anfahren durch positionsgenaues Abschalten des Stellantriebes vermeiden.

Bei der erfindungsgemäßen Vorrichtung kann die Schwenkwelle 4 mittig zur Dichtplatte 3 und Durchflußöffnung 2 stehen, oder in bekannter Weise seitlich zur Dichtplatte und Durchflußöffnung angeordnet sein.

0071750

81.027

LEYBOLD-HERAEUS GMBH
Köln-Bayenthal

Drosselklappe mit genauer Einstellung des Durchflußspaltes für vakuumtechnische Anlagen

ANSPRÜCHE

1. Drosselklappe mit genauer Einstellung des Durchflußspaltes für vakuumtechnische Anlagen, bei welcher die
Dichtplatte mit einer zur Durchflußöffnung senkrecht
liegenden Welle geschwenkt wird, deren Bewegung über
eine vakuumgedichtete Schubstange von einem in der
Atmosphäre liegenden Stellantrieb erfolgt, d a d u r c h
g e k e n n z e i c h n e t , daß die Schwenkwelle (4)
unter der Wirkung einer vorgespannten Feder (8) steht,
die auf die Schwenkwelle ein Drehmoment ausübt, und daß
der Stellantrieb (17) eine Selbsthemmung oder Bremsung
aufweist.

2. Drosselklappe nach Anspruch 1, d a d u r c h  g e k e n n -
z e i c h n e t , daß die Richtung des von der Feder (8)
erzeugten Drehmomentes so gewählt ist, daß es in Richtung
Schließstellung der Drosselklappe (3) wirkt.

3. Drosselklappe nach Anspruch 1 oder 2, d a d u r c h
g e k e n n z e i c h n e t , daß ein elektrisches Positionsmeßgerät (23) oder Positionsschaltmittel direkt an
der Schwenkwelle (4) oder an den Übertragungsgliedern
(13 bis 16) zum Stellantrieb angekoppelt sind.

4. Drosselklappe nach Anspruch 1, 2 oder 3, d a d u r c h
g e k e n n z e i c h n e t , daß die Feder (8) als Flach-
Spiralfeder ausgebildet ist.

0071750

FIG.1

FIG.2